# EUROPÄISCHE PATENTSCHRIFT

(11) **EP 3 023 302 B1**
(45) Veröffentlichungstag und Bekanntmachung des Hinweises auf die Patenterteilung: **13.12.2017**
(21) Anmeldenummer: 15193669.7
(22) Anmeldetag: 09.11.2015
(51) Int. Cl.: B60R 9/06, B60D 1/52

(54) **LASTENTRÄGERKUPPLUNG**
LOAD SUPPORT COUPLING
COUPLAGE DE SUPPORT DE CHARGE

(30) Priorität: 19.11.2014 DE 102014017019
(43) Veröffentlichungstag der Anmeldung: 25.05.2016
(73) Patentinhaber: WESTFALIA - Automotive GmbH, 33378 Rheda-Wiedenbrück (DE)
(72) Erfinder: Cakici, Hakan, 33332 Gütersloh (DE); Peitz, Jürgen, 33449 Langenberg (DE)
(74) Vertreter: Patentanwälte Bregenzer und Reule Partnerschaftsgesellschaft mbB

(56) Entgegenhaltungen:
- EP-A2- 1 757 488
- DE-A1- 4 403 715
- DE-A1-102010 045 104

## Beschreibung

Die Erfindung betrifft eine Lastenträgerkupplung zur Ankupplung eines Heck-Lastenträgers an ein Kraftfahrzeug gemäß dem Oberbegriff des Anspruchs 1.

Eine derartige Lastenträgerkupplung ist beispielsweise in DE 10 2010 045 104 A1 erläutert.

Bei einer Lastenträgerkupplung gemäß EP 1 757 488 A2 sind an den Steckvorsprüngen Kugelverriegelungen vorgesehen, d.h. ein Sperrbolzen drückt Formschlusskörper in Gestalt von Kugeln nach radial außen in eine Formschlussaufnahme Gestalt in einer Kugelsitzrinne. Der Halt dieser Anordnung ist nicht immer optimal.

Ausgehend davon ist es Aufgabe der vorliegenden Erfindung, eine Lastenträgerkupplung bereitzustellen, bei der die Kuppelelemente optimal aneinander in der Verriegelungsstellung halten.

Zur Lösung der Aufgabe ist eine Lastenträgerkupplung gemäß der technischen Lehre des Anspruchs 1 vorgesehen.

Es ist ein Grundgedanke der vorliegenden Erfindung, dass die Kuppelelemente, wenn sie aneinander gesteckt sind, aufgrund der Verhakung optimal auf Zug miteinander verbunden sind. Der Hakenkörper ist durch eine einfache Mechanik schwenkbeweglich gelagert, was die Betätigung vereinfacht, zugleich aber eine optimale Krafteinleitung ermöglicht.

Zudem sorgt die mindestens eine Stützfläche dafür, dass der Haken nicht nur sozusagen auf Zug in Richtung der Steckachse wirksam ist, sondern auch quer dazu. Mithin stützt also der Hakenkörper die Kuppelelemente auch quer zur Steckachse aneinander ab.

Zweckmäßigerweise können selbstverständlich auch mehrere Hakenkörper vorgesehen sein, beispielsweise ein Paar von Hakenkörpern. Die Hakenkörper sind zweckmäßigerweise an einander entgegengesetzten Seiten des Steckteils angeordnet. Sie können aber auch an einander gegenüberliegenden Seiten der Steckaufnahme angeordnet sein. Nach der Erfindung ist vorgesehen, dass der mindestens eine Hakenkörper an einer Außenseite des Steckteils oder einer Innenseite der Steckaufnahme angeordnet ist, sodass er zwischen den ineinander gesteckten Kuppelelementen sandwichartig angeordnet ist. Eine vorteilhafte Ausführungsform der Erfindung sieht vor, dass die mindestens eine Stützfläche eine sich parallel oder im Wesentlichen parallel zu der Steckachse erstreckende Stützfläche umfasst.

Bevorzugt ist vorgesehen, dass die mindestens eine Stützfläche eine Schrägfläche oder Keilfläche umfasst. Somit kann also der Hakenkörper zusätzlich noch verkeilt oder anhand der Schrägfläche verspannt werden.

Die mindestens eine Stützfläche umfasst zweckmäßigerweise zueinander winkelige Stützflächen zur Anlage an zueinander winkeligen Widerlagerflächen. Beispielsweise sind die Stützflächen zueinander rechtwinkelig. Aber auch andere Winkelstellungen sind ohne weiteres möglich. Es ist beispielsweise möglich, dass die Widerlagerflächen an einer Innenecke oder an einem Inneneckbereich der Steckaufnahme angeordnet sind, während die zugeordneten, zueinander winkeligen Stützflächen an einem Außeneckbereich oder Kantenbereich des Hakenkörpers angeordnet sind. Es versteht sich, dass die zueinander winkeligen Stützflächen direkt ineinander übergehen können. Es ist aber auch möglich, dass die zueinander winkeligen Stützflächen einen Abstand zueinander haben. So ist beispielsweise möglich, dass zueinander winkelige Stützflächen an einander entgegengesetzten Seiten des Hakenkörpers angeordnet sind oder dass zwischen den Stützflächen nicht als Stützflächen dienende Bereiche vorgesehen sind.

In diesem Zusammenhang sei erwähnt, dass die mindestens eine Stützfläche zweckmäßigerweise einander entgegengesetzte erste und zweite Stützflächen umfasst, die sich in der Verriegelungsstellung an einander gegenüberliegenden Widerlagerflächen des anderen Kuppelelements abstützen. Diese Stützflächen können, müssen aber nicht zueinander winkelig oder schräg stehen.

Bezüglich der Schwenkachse des Hakenkörpers ist es ebenfalls vorteilhaft, wenn an entgegengesetzten Seiten Stützflächen vorhanden sind. Somit können also die Stützflächen sozusagen gegensinnig schwenken in Richtung der Widerlagerflächen, um an diesen anzuliegen bzw. sich an diesen abzustützen.

Die Stützflächen können Stützflächen umfassen, die bezüglich der Schwenkachse punktsymmetrisch sind oder an zueinander symmetrischen Bereichen angeordnet sind.

Die mindestens eine Stützfläche umfasst zweckmäßigerweise eine erste und eine zweite Stützfläche, die bezüglich der Steckachse hintereinander angeordnet sind. Dies können beispielsweise die beiden an entgegengesetzten Seiten bezüglich der Schwenkachse angeordnete Stützflächen sein.

Der mindestens eine Hakenkörper bildet zweckmäßigerweise einen Schwenkhebel. Von der Schwenkachse weg erstrecken sich vorzugsweise Arme des Hakenkörpers. Bevorzugt ist es, wenn ein Betätigungsarm, an dem die Betätigungsanordnung angreift, länger ist als ein Haltearm, an dem der mindestens eine Formschlusskörper angeordnet ist.

Der mindestens eine Formschlusskörper bildet zweckmäßigerweise einen Hakenvorsprung des Hakenkörpers. Es ist aber auch möglich, dass der Formschlusskörper von einem Hakenvorsprung des Hakenkörpers separat ist, das heißt dass der Hakenkörper sowohl den Formschlusskörper als auch den Hakenvorsprung umfasst.

Bevorzugt steht der mindestens eine Formschlusskörper vor eine Stützfläche oder die Stützflächen des Hakenkörpers vor.

Es ist vorteilhaft, wenn der Formschlusskörper einstückig mit dem Hakenkörper ist.

Bevorzugt ist der Formschlusskörper an einem freien Endbereich des Hakenkörpers angeordnet. Besonders vorteilhaft ist es, wenn er dann einstückig sozusagen den Hakenvorsprung bildet. Es ist aber auch möglich, dass der Formschlusskörper zwischen freien Endbereichen des Hakenkörpers angeordnet ist.

Bevorzugt ist es, wenn die Steckaufnahme an dem Fahrzeug-Kuppelelement angeordnet ist oder davon gebildet ist. Das Steckteil, beispielsweise der Steckvorsprung, hingegen ist zweckmäßigerweise vorteilhaft an dem Lastenträger-Kuppelelement angeordnet oder bildet dieses im Wesentlichen.

Bevorzugt ist es, wenn der Hakenkörper einen Schwenkhebel bildet. Die Betätigungsanordnung greift zweckmäßigerweise an einem Längsende des Schwenkhebels an. Beispielsweise drückt sie auf das Längsende des Schwenkhebels oder ist daran gelenkig angeordnet. Ein Hakenvorsprung, beispielsweise der Formschlusskörper, insbesondere der einstückig mit dem Hakenkörper verbundene Formschlusskörper, ist dann am anderen Längsende des Schwenkhebels vorteilhaft vorgesehen.

Der Hakenkörper, genauer gesagt der mindestens eine Hakenkörper, bildet zweckmäßigerweise einen Spannkörper zur Verspannung der Kuppelelemente quer zu der Steckachse und ist durch die Betätigungsanordnung zwischen einer Spannstellung, in welcher die Kuppelelemente miteinander verspannt sind, und einer Freigabestellung, in welcher die Kuppelelemente entlang der Steckachse längs beweglich relativ zueinander sind, verstellbar.

Die Betätigungsanordnung kann motorisch angetrieben sein. Bevorzugt ist aber eine einfache manuelle Betätigung. Es kann aber auch vorgesehen sein, dass die Betätigungsanordnung alternativ manuell und motorisch betätigbar ist, beispielsweise manuell für einen Notbetrieb.

Bevorzugt ist eine Hebelanordnung, die einen Bestandteil der Betätigungsanordnung bildet oder die Betätigungsanordnung an sich darstellt. Die Hebelanordnung kann motorisch betrieben sein. Bevorzugt ist es jedoch, wenn die Hebelanordnung mindestens einen manuell betätigbaren Hebel umfasst. Weiterhin ist es vorteilhaft, wenn die Betätigungsanordnung ein Übersetzungsgetriebe umfasst. Das Übersetzungsgetriebe kann beispielsweise eine Hebelanordnung, ein Zahnradgetriebe oder dergleichen umfassen. Das Übersetzungsgetriebe wirkt zweckmäßigerweise im Sinne einer Kraftverstärkung der Betätigungskraft. So wirkt die Betätigungskraft mit größerer Kraft auf das mindestens eine Formschlusselement oder den Hakenkörper.

Eine Weiterbildung der Erfindung umfasst eine Übertotpunkt-Mechanik mit einem Totpunkt zwischen der Verriegelungsstellung und der Lösestellung. Die Übertotpunkt-Mechanik ist im Zusammenhang mit dem mindestens einen Hakenkörper vorgesehen, der zum einen längs, zum anderen quer zur Steckachse abstützend und haltend wirkt.

Bevorzugt umfasst die Übertotpunkt-Mechanik ein Hebelgetriebe. Das Hebelgetriebe umfasst vorzugsweise einen manuell betätigbaren Hebel oder ein manuell betätigbares Betätigungselement.

Ein Übertragungsglied der Übertotpunkt-Mechanik ist zweckmäßigerweise einerseits an dem Hakenkörper schwenkbeweglich und andererseits an einen Betätigungshebel, zum Beispiel einen manuell oder motorisch zu betätigenden Betätigungshebel, schwenkbeweglich angelenkt.

Eine Schwenkachse des Betätigungshebels und eine Schwenkachse des Übertragungsglieds sind zweckmäßigerweise an einander entgegengesetzten Seiten desjenigen Kuppelelements, welches die Übertotpunkt-Mechanik trägt, angeordnet.

Das die Betätigungsanordnung tragende Kuppelelement kann z.B. die fahrzeugseitige Halterung sein. Beispielsweise ist es denkbar, dass ein manuelles oder motorisches Betätigungselement am oder im Kraftfahrzeug angeordnet ist, um die Betätigungsanordnung zu betreiben oder auf die Betätigungsanordnung einzuwirken. Weiterhin ist es möglich, dass der mindestens eine Hakenkörper an einem fahrzeugseitigen Kuppelelement angeordnet ist, insbesondere dann, wenn die Betätigungsanordnung ebenfalls fahrzeugseitig vorgesehen ist. Beim in der Zeichnung dargestellten Ausführungsbeispiel sind sowohl die Betätigungsanordnung als auch der mindestens eine Hakenkörper am lastenträgerseitigen Kuppelelement vorgesehen.

Eine zweckmäßige Ausführungsform sieht vor, dass die Betätigungsanordnung verriegelbar und/oder verschließbar ist. Beispielsweise ist ein Riegel vorhanden, mit dem ein Betätigungshebel oder sonstiger Handgriff in der Verriegelungsstellung verriegelbar ist.

Auch ein Schloss, mit dem der Betätigungshebel oder ein sonstiges Betätigungselement verschließbar ist, ist zweckmäßig. Besonders bevorzugt ist eine Verriegelung bzw. ein Verschließen der Übertotpunkt-Mechanik. Bevorzugt ist vorgesehen, dass in der Verriegelungsstellung, also jenseits des Totpunkts, ein Schloss und/oder ein Riegel vorhanden ist, um die Übertotpunkt-Mechanik ortsfest festzulegen.

Bevorzugt ist es, wenn das Steckteil und die Steckaufnahme eine polygonale Gestalt haben. Damit ist gleichzeitig eine Verdrehsicherung gegeben.

Nachfolgend wird die Erfindung anhand eines Ausführungsbeispiels erläutert. Es zeigen:
- Figur 1: eine perspektivische Schrägansicht einer Lastenträgerkupplung, deren Kuppelelemente voneinander entfernt sind,

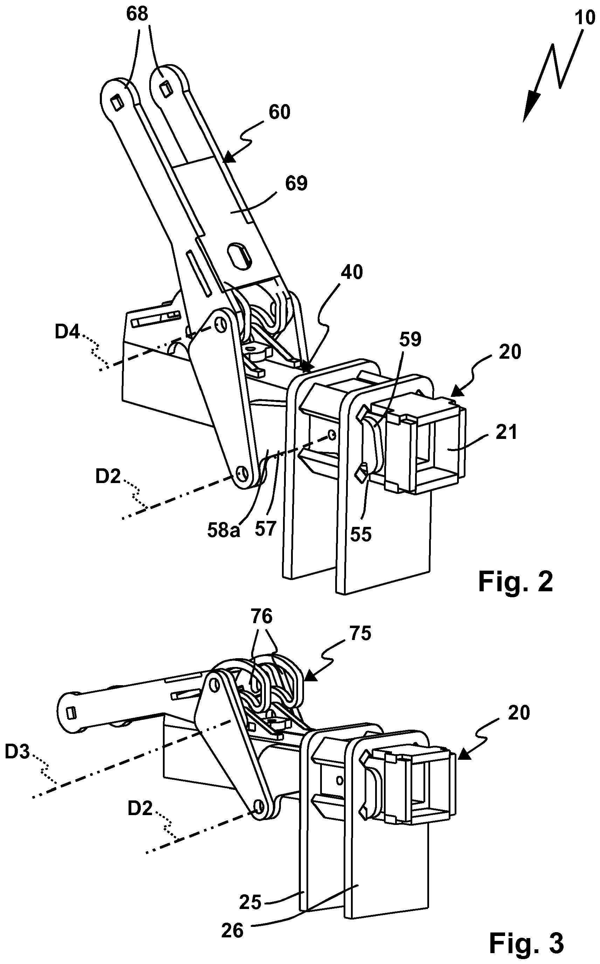

- Figur 2: die Lastenträgerkupplung gemäß Figur 1 mit ineinander gesteckten Kuppelelementen,
- Figur 3: die Lastenträgerkupplung gemäß Figuren 1, 2 im verriegelten Zustand,

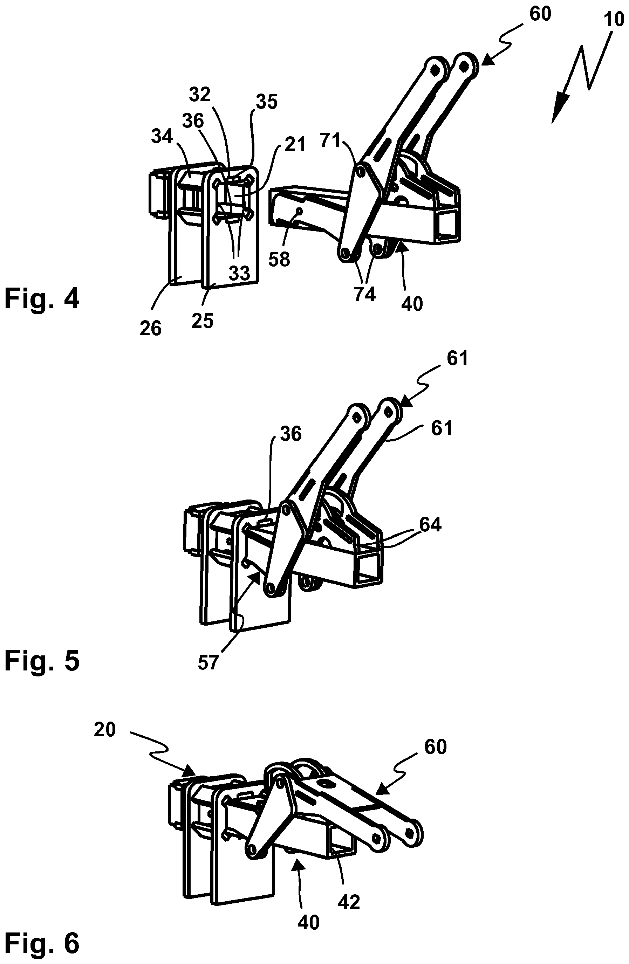

- Figur 4: die Lastenträgerkupplung entsprechend Figur 1, jedoch von einer entgegengesetzten Seite her,
- Figur 5: die Lastenträgerkupplung gemäß Figur 2 entsprechend der Ansicht gemäß Figur 4
- Figur 6: die Lastenträgerkupplung gemäß Figur 3 entsprechende Ansicht der Figuren 4 und 5,
- Figur 7: eine Seitenansicht der Lastenträgerkupplung entsprechend der Figuren 2 und 4 im entriegelten Zustand,
- Figur 8: die Seitenansicht entsprechend Figur 4 der Lastenträgerkupplung, jedoch im verriegelten Zustand,
- Figur 9: eine Ansicht der Lastenträgerkupplung gemäß Figur 7 schräg von hinten und
- Figur 10: eine Ansicht der Lastenträgerkupplung gemäß Figur 8 in der Ansicht entsprechend Figur 9.

Eine Lastenträgerkupplung 10 gemäß der Zeichnung umfasst ein Fahrzeug-Kuppelelement 20 und ein Lastenträger-Kuppelelement 40.

Das Fahrzeug-Kuppelelement 20 ist an einem Kraftfahrzeug 90 (schematisch dargestellt) angeordnet. Beispielsweise wird es von einem Querträger einer Trägeranordnung 91 getragen, die an einem Heck des Kraftfahrzeugs 90 angeordnet ist. Vorzugsweise ist vorgesehen, dass das Fahrzeug-Kuppelelement 20 zumindest teilweise durch einen Stoßfänger 92 des Kraftfahrzeugs verdeckt ist. Es kann auch vorgesehen sein, dass das Fahrzeug-Kuppelelement 20 nach unten vor den Stoßfänger 92 vorsteht.

Das Lastenträger-Kuppelelement 40 ist an einem Lastenträger 95 angeordnet, der schematisch dargestellt ist. Der Lastenträger 95 dient beispielsweise zum Transport von Fahrrädern, zum Transport einer Transportbox oder dergleichen. Der Lastenträger 95 kann z.B. ein Tragegestell, Trägerinnen zum Abstellen von Fahrrädern oder dergleichen umfassen.

Von einer Tragbasis 96, z.B. einem Transportgestell, des Lastenträgers 95 steht beispielsweise ein Steckteil 41, beispielsweise ein Steckvorsprung, integral ab. Das Steckteil 41 dient zum Einstecken in eine Steckaufnahme 21 des Fahrzeug-Kuppelelements 20.

An dieser Stelle sei erwähnt, dass dies nur exemplarisch zu verstehen ist, d.h. dass bei einem erfindungsgemäßen System beispielsweise eine Steckaufnahme auch am Lastenträger, der Steckvorsprung oder das Steckteil am Kraftfahrzeug vorgesehen sein kann.

Ferner ist es auch möglich, dass ein erfindungsgemäßes System einen Bausatz oder ein Nachrüstsystem bildet, d.h. dass beispielsweise das Lastenträger-Kuppelelement 40 nachträglich an einem bereits vorhandenen Gestell oder einer vorhandenen Tragbasis eines Lastenträgers montiert wird. So könnten beispielsweise bei einem Lastenträger, der an sich zu Befestigung an einer Anhängekupplung, insbesondere der Kupplungskugel, vorgesehen ist, nachträglich der Steckvorsprung oder das Steckteil 41 sowie die nachfolgend erläuterten Komponenten des Kuppelelements 40 montiert werden.

Der Steckvorsprung oder das Steckteil 41 umfasst beispielsweise ein Profil 42, insbesondere ein Rohrprofil, das in die Steckaufnahme 21 einsteckbar ist.

Das Profil 42 oder das Steckteil 41 umfasst beispielsweise einander gegenüberliegende Seitenwände 43, 44 sowie obere Wand 46 und eine untere Wand 45. Die Wände 43-46 sind vorliegend rechtwinkelig zueinander angeordnet, d.h. sie bilden ein rechtwinkeliges oder vorzugsweise quadratisches Profil 42. Ein polygonales Profil ist zwar im Sinne der Erfindung vorteilhaft, jedoch nicht zwingend notwendig. Es könnten auch beispielsweise runde oder ausgerundete Profilquerschnitte eines Steckvorsprungs oder Steckteils ohne weiteres vorgesehen sein. Weiterhin begrenzen die Wände 43-46 einen Hohlraum oder einen Innenraum 47, was auch eine Option darstellt, jedoch nicht zwingend ist. Es ist denkbar, dass der Steckvorsprung oder das Steckteil einer erfindungsgemäßen Lastenträgerkupplung einen massiven Querschnitt hat.

Das Fahrzeug-Kuppelelement 20 umfasst Trägerelemente 25, 26, die an der Trägeranordnung 91 festgelegt sind, beispielsweise von dieser nach oben abstehen, wobei dies nur exemplarisch zu verstehen ist, das heißt selbstverständlich könnte das Fahrzeug-Kuppelelement 20 auch nach unten beispielsweise vor einen Querträger vorstehen. Die Trägerelemente 25, 26 tragen eine obere Stützwand 22 und eine untere Stützwand 24, die die Steckaufnahme 21 oben und unten begrenzen.

Innenflächen 30, 31 der Stützwände 22, 24 dienen zur Anlage der oberen Wand 46 und der unteren Wand 45 des Profils 42 oder des Steckteils 41.

Die obere Stützwand 22 und die untere Stützwand 24 sind durch Streben 23 miteinander verbunden bzw. versteift. Die Streben 23 könnten zur Abstützung bzw. Aufnahme des Steckteils 41 dienen, was jedoch vorliegend so nicht vorgesehen ist.

Durch entsprechende Verzapfungen oder Umkantungen, Aussparungen oder dergleichen an ihren jeweiligen Längsendbereichen sind die Streben 23 mit den Stützwänden 22, 24 formschlüssig verbunden. Zudem ist vorzugsweise eine Verklebung, Verschweißung oder dergleichen vorgesehen. Jedenfalls bilden die Streben 23 und die Wände 22, 24 sozusagen einen Aufnahmekäfig.

Die Steckaufnahme 21, z.B. der Aufnahmekäfig, wird zudem von Seitenwänden 34 begrenzt, die sozusagen den Außenkanten des Profils 42 zugeordnet sind, jedoch diese nicht unmittelbar stützen, sondern Widerlagerflächen für später noch erläuterte Hakenkörper bereitstellen.

An den Trägerelementen 25, 26 sind Aufnahmen 27 vorgesehen, welche die oberen und unteren Stützwände 22, 24 sowie die schrägen Seitenwände 34 tragen. Zudem bilden die Aufnahmen 27 Bestandteile der Steckaufnahme 21, nämlich mit ihren sich zwischen den oberen und unteren Stützwände 22, 24 erstreckenden Abschnitten 33.

An den Längsendbereichen der schrägen Seitenwände 34 sind Zapfenvorsprünge 29 vorgesehen, die in Aussparungen 28 der Trägerelemente 25, 26 eingreifen und dort formschlüssig gehalten sind. Die Aussparungen 28 sind beispielsweise an den Inneneckbereichen der im Querschnitt entsprechend dem Steckteil 41 im Wesentlichen quadratischen Aufnahmen 27 vorgesehen.

Auch die oberen und unteren Stützwände 22, 24 sind entsprechend formschlüssig verzapft oder gehalten. Sie greifen mit Vorsprüngen 35, beispielsweise in der Art von Zapfen, in Aufnahmen 36 an den sich quer zu den Abschnitten 33 erstreckenden Abschnitten 32 der Aufnahmen 27 der Trägerelemente 25, 26 ein.

An dieser Stelle sei bemerkt, dass das Fahrzeug-Kuppelelement 20 aus plattenartigen Bestandteilen gebildet ist. Das ist aber nur beispielhaft zu verstehen. Es ist beispielsweise auch ein Fahrzeug-Kuppelelement als Gussteil mit entsprechend polygonalen Ausbildungen oder dergleichen ohne weiteres möglich.

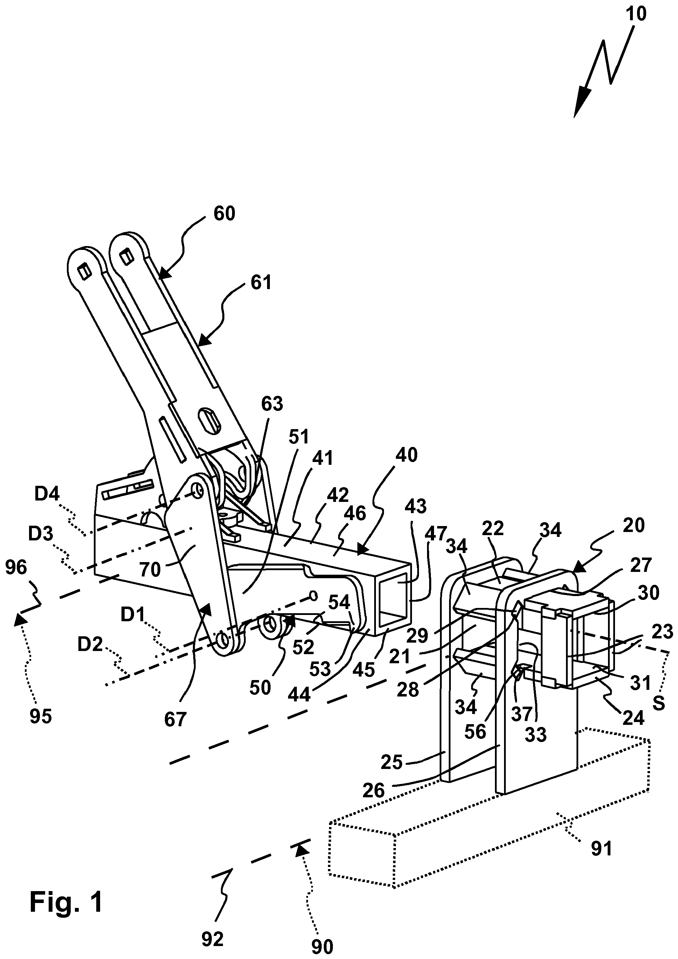

Das Steckteil 41 ist in die Steckaufnahme 21 entlang einer Steckachse S einsteckbar. Das ist in Figur 1 angedeutet. Zur Sicherung gegen ein unbeabsichtigtes Lösen bezüglich der Steckachse S, d.h. also für den Fahrbetrieb des Lastenträgers 95 im Zusammenhang mit dem Kraftfahrzeug 90, dient eine Formschlusskörperanordnung 50. Die Formschlusskörperanordnung 50 umfasst an dem Steckteil 41 angeordnete Hakenkörper 51, an deren freien Endbereichen 52 Haken 53 angeordnet sind. Der jeweilige Haken 53 bildet einen Formschlusskörper 54 und ist vorzugsweise einstückig mit dem jeweiligen Hakenkörper 51.

Die Haken 53 greifen in Hakenaufnahmen 55 am Fahrzeug-Kuppelelement 20 formschlüssig ein. Die Hakenaufnahmen 55 bilden Formschlussaufnahmen 56. Beispielsweise sind die Hakenaufnahmen 55 als Aussparungen 37 ausgestaltet. Bevorzugt ist es, wenn die Aussparungen 37 und mithin die Hakenaufnahmen 55 so vorgesehen sind, dass sie unmittelbar neben einem der Stützelemente oder Trägerelemente 25, 26 angeordnet sind, also benachbart zur Aufnahme 27 eines jeweiligen Trägerelements, sodass sich der Haken 53 nicht nur direkt an der Aussparung 37, die beispielsweise an dem oberen oder unteren Stützelement oder der Stützwand 22, 24 vorgesehen ist, abstützt, sondern auch am Trägerelement 25 oder 26. Vorliegend ist die Anordnung so getroffen, dass jeweils eine Aussparung 37 unmittelbar neben dem Trägerelement 26 an der unteren Stützwand 24 vorgesehen ist.

Durch die Formulierung "Stützelement" soll deutlich werden, dass die jeweilige Stützwand 22, 24 selbstverständlich nicht plattenartig oder wandartig sein muss, sondern dies nur eine Option darstellt.

Der jeweilige Hakenkörper 51 bildet einen Schwenkhebel 57, der um eine Schwenkachse D1 schwenkbar an dem Lastenträger-Kuppelelement 40 gelagert ist. Beispielsweise sind Schwenklager 58 an den Seitenwänden 43, 44 vorgesehen, mit denen die Hakenkörper 51 oder Schwenkhebel 57 schwenkbar am Steckteil 41 gelagert sind. Die Schwenkhebel 57 umfassen jeweils einen Haltearm 58a, an welchem der mindestens eine Formschlusskörper 54 bzw. der Haken 53 angeordnet ist, sowie einen Betätigungsarm 59, der durch eine Betätigungsanordnung 60 betätigbar ist.

Die Betätigungsanordnung 60 umfasst einen Betätigungshebel 61, der manuell zu ergreifen ist. An einem freien Endbereich 62 des Betätigungshebels 61, an dem beispielsweise ein nicht dargestelltes Griffstück, insbesondere ein Griffstab, angeordnet sein kann, ist der Betätigungshebel 61 durch einen Bediener bequem ergreifbar. Der Betätigungshebel 61 ist um eine Drehachse D3 drehbar bzw. schwenkbar bezüglich des Lastenträger-Kuppelelements 40 gelagert. Die Drehachse D3 wird von einem Lager 63 bereitgestellt, welches Lagerböcke 64 umfasst. An den Lagerböcken 64 sind Schwenklager 65 vorgesehen. Ein zu dem freien Endbereich 62 entgegengesetzter Endbereich 66 des Betätigungshebels 61 ist an dem Schwenklager 65 um die Drehachse D3 schwenkbar gelagert. Beispielsweise durchsetzt mindestens ein Lagerelement, insbesondere ein Lagerbolzen, die Lagerböcke 64 sowie entsprechende Lageraufnahmen am Endbereich 66, um die Schwenklagerung bezüglich der Drehachse D3 zu bilden.

An dem Betätigungshebel 61 ist ein Übertragungsglied 70 um eine Drehachse D4 schwenkbar angelenkt. Beispielsweise durchsetzt ein Lagerbolzen oder Lagerelement 71 nicht näher bezeichnete Lageraufnahmen des Übertragungsglieds 70 sowie des Betätigungshebels 61, so dass das Übertragungsglied 70 und der Betätigungshebel 61 relativ zueinander um die Drehachse D4 drehen oder schwenken können. Beispielsweise ist der Lagerbolzen oder das Lagerelement 71 an einem Endbereich 72 des Übertragungsglieds 70 vorgesehen.

Ein jeweils anderer Endbereich 73 eines jeweiligen Übertragungsglieds 70 ist schwenkbeweglich um eine Drehachse D2 an einen jeweiligen Schwenkhebel 57 also an einem jeweiligen Hakenkörper 51 angelenkt. Beispielsweise durchsetzt ein Lagerelement oder Lagerbolzen 74 Lageraufnahmen am Endbereich 73 des Übertragungsgliedes 70 sowie am Betätigungsarm 59, insbesondere dessen freiem Endbereich. Dadurch ist eine optimale Hebelkraft erzielt, d.h. der Angriff der Betätigungsanordnung 60 an einem jeweiligen Schwenkhebel 57 oder Hakenkörper 51 erfolgt möglichst weit entfernt von der Schwenkachse oder Drehachse D1, was eine optimale Kraftverstärkung der Betätigungskraft ermöglicht.

An jeder Seitenwand 43, 44, also jedem Hakenkörper 51 zugeordnet, ist jeweils ein Übertragungsglied 70 vorgesehen. Auch der Betätigungshebel 61 ist vorzugsweise aus zweckmäßigerweise plattenartigen oder stangenartigen Hebelelementen 68 gebildet, die durch eine Querstrebe 69 miteinander verbunden sind. Dadurch ist ein Leichtbau erzielt. An jedem der Hebelelemente 68 ist jeweils eine Lageraufnahme für den Lagerbolzen 71 vorgesehen, d.h. jedes Hebelelement 68 nimmt sozusagen ein Übertragungsglied 70 mit bzw. betätigt dieses.

Der jeweilige Lagerbolzen oder das Lagerelement 71 greift in eine Anschlageinrichtung 75 ein. Beispielsweise ist eine im Wesentlichen kreisförmige Aufnahmekulisse 76 an den Lagerböcken 64 vorgesehen, in welche die Lagerelemente 71 eingreifen. Mithin bilden also die Lagerelemente 71 gleichzeitig Anschlagelemente des Übertragungsglieds 70. Selbstverständlich könnten zu diesem Zweck auch separate Maßnahmen getroffen sein, beispielsweise Vorsprünge am Übertragungsglied 70, die in die Aufnahmekulisse 76 eingreifen, jedenfalls mit der Anschlageinrichtung 75 zusammenwirken.

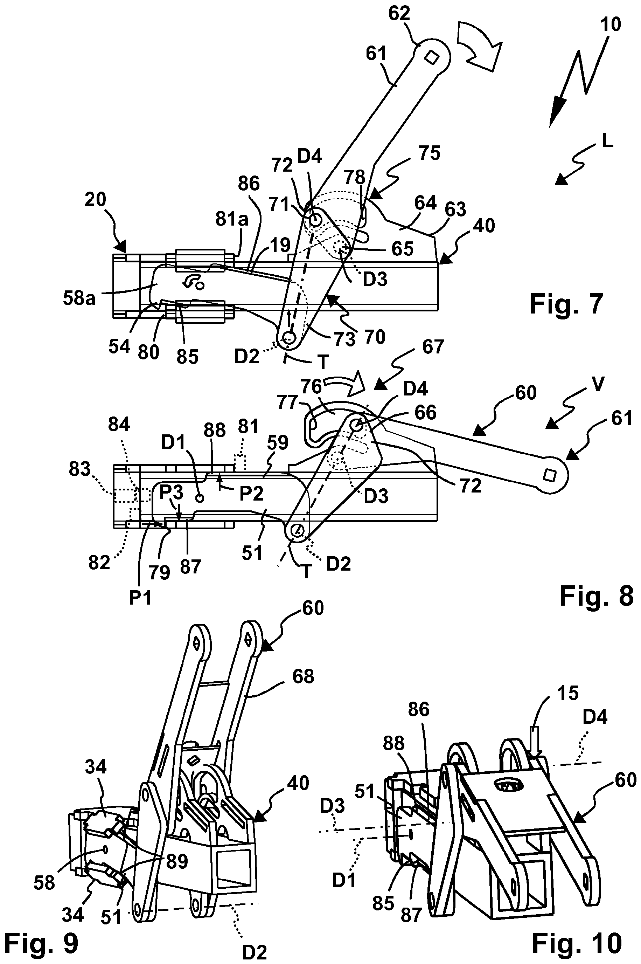

Die jeweiligen Längsendbereiche der Aufnahmekulisse 76 bilden Anschläge 77, 78 für das Lagerelement 79, also das Anschlagglied des Übertragungsglieds 70, und begrenzen jeweils eine Schwenkbewegung des Übertragungsglieds 70 aus der in Figur 7 dargestellten Lösestellung L (Anschlag 77) in die in Figur 8 dargestellte Verriegelungsstellung V (Anschlag 78) der Betätigungsanordnung 60 und der Formschlusskörperanordnung 50.

Die Schwenkhebel 57 bzw. die Hakenkörper 51 machen dabei eine Schwenkbewegung oder Drehbewegung um die Drehachse D1, bei der die Haken 53 aus einer Außereingriffstellung (Lösestellung L/ Figur 7) in eine Eingriffstellung (Verriegelungsstellung V/ Figur 8) mit den Hakenaufnahmen 55 gelangen. Dann sind auch die Formschlusskörper 54 in den Formschlussaufnahmen 56 formschlüssig aufgenommen. Stützflächen 79 der Haken 53 stützen sich dann an Widerlagerflächen 80 der Aussparungen 37 bzw. Hakenaufnahmen 55 ab, so dass das Lastenträger-Kuppelelement 40 bezüglich des Fahrzeug-Kuppelelements 20 in Richtung der Steckachse S zugfest festgelegt ist. Die somit einwirkende Kraft ist durch einen Pfeil P1 in Figur 8 angedeutet.

Dabei ist es möglich, dass beispielsweise ein vor das Steckteil 41 nach oben vorstehender Anschlagkörper 81 an dem Fahrzeug-Kuppelelement 20, beispielsweise der oberen Stützwand an einer Widerlagerfläche 81a anschlägt (Figur 8).

Aber auch ein beispielsweise im Innenraum der Steckaufnahme 21 angeordneter Anschlagkörper 82 kann vorgesehen sein, an dem das freie Ende des Steckteils 41 anschlägt.

Besonders bevorzugt ist es, wenn ein Steckanschlag, der sozusagen auf Zug bezüglich der Steckachse S als Anschlag bzw. in Gegenrichtung zur Wirkung der Haken 53 wirkt, durch eine Steckkontakt-Anordnung 83 des Fahrzeug-Kuppelelements 20 und eine entsprechende Gegen-Steckkontakt-Anordnung 84 des Lastenträger-Kuppelelements 40 gebildet ist, die für eine elektrische Stromversorgung des Lastenträgers 95 durch das Bordnetz des Kraftfahrzeugs 90 vorgesehen sind und elektrisch kontaktierend ineinander eingreifen können. Die Steckkontakt-Anordnungen 83, 84 umfassen beispielsweise elektrische Steckbuchsen und Steckvorsprünge.

Selbstverständlich könnten auch andere Kontaktierungen oder elektrische Stromversorgungen für den Lastenträger 95 vorgesehen sein, beispielsweise außerhalb der Lastenträgerkupplung 10, insbesondere über Kabel und entsprechende Steckverbinder.

Weiterhin ist es denkbar, dass eine Verkeilung oder Verspannung bezüglich der Steckachse S erfolgt, d.h. dass durch diese Verkeilung des Steckteils 41 in der Steckaufnahme 41 ein Widerlager für die Kraftwirkung der Haken 53 bezüglich der Hakenaufnahmen 55 realisiert ist.

Die Formschlusskörperanordnung 50 bewirkt also primär eine Verspannung und/oder eine Verriegelung der Kuppelelemente 20, 40 bezüglich der Steckachse S. Aber auch quer dazu ist ein fester Halt gegeben. Im Prinzip bildet nämlich jeder Hakenkörper 51 einen Spannkörper zur Verspannung der Kuppelelemente 20, 40 quer zu der Steckachse S. In Figur 7 ist eine Freigabestellung, in welcher die Kuppelelemente 20, 40 bezüglich der Steckachse S längs beweglich relativ zueinander sind, gezeigt. In Figur 8 hingegen ist eine Spannstellung dargestellt, bei der die Hakenkörper 51 das Steckteil 41 in der Steckaufnahme 21 quer zur Steckachse S verspannen. Im Prinzip ist das Steckteil 41 in der Steckaufnahme 21 sozusagen bezüglich der Schwenkachse D1 verspannt.

An einander entgegengesetzten Längsseiten 85, 86 sind nämlich Spannflächen bildende Stützflächen 87, 88 vorgesehen. Die Stützflächen 87, 88 stützen die Hakenkörper 51 und somit das Steckteil 41 quer zur Steckachse S in der Steckaufnahme 21 ab. Die Stützflächen 87, 88 wirken auf die Innenseiten der schrägen Seitenwände 34, die Widerlagerflächen 89 darstellen. Die entsprechende Krafteinwirkung oder Stützkraft ist durch Pfeile P2 und P3 angedeutet.

Zweckmäßigerweise wird also das Steckteil 41 bzw. das Kuppelelement 40 in den jeweiligen Inneneckbereichen der Steckaufnahme 21 quer zur Steckachse S abgestützt.

Die Stützflächen 87, 88 verlaufen winkelig oder schräg zu den oberen und unteren Stützwänden 22, 24 der Steckaufnahme 21. Der Schrägverlauf bezieht sich aber auch auf das Profil 42 oder das Steckteil 41. Die Stützflächen 87, 88 verlaufen nämlich winkelig zu den Außenseiten der Seitenwände 43, 44 sowie den unteren und oberen Wänden 45, 46.

Der feste verspannte Halt wird durch eine Übertotpunkt-Mechanik 67 der Betätigungsanordnung 60 sicher gehalten. Die Drehachse D4 wird nämlich durch die Verstellung zwischen der Verriegelungsstellung V und der Lösestellung L über die Schwenkachse D3 hinweg verstellt, die sozusagen einen Totpunkt der Hebelmechanik bzw. der Übertotpunkt-Mechanik darstellt. Durch eine Verbindungslinie T ist diese Übertotpunktlage in Figur 8 ansatzweise erkennbar. In der Totpunkt-Lage ist der Abstand zwischen den Schwenkachsen oder Drehachsen D2 und D3 am kürzesten. Wenn also die Verriegelungsstellung V (Figur 8) eingenommen ist, ist diese Totpunkt-Lage ein klein wenig überschritten, also eine Übertotpunkt-Lage eingenommen, sodass der Abstand zwischen den Schwenkachsen D2 und D3 etwas größer ist als in der Totpunkt-Lage. Dadurch verbleibt die Betätigungsanordnung 60 stabil in ihrer Verriegelungsstellung V, wodurch gleichzeitig die Kuppelelemente 20, 40 sicher aneinander verriegelt sind, vorzugsweise sogar wie im Ausführungsbeispiel miteinander verspannt sind.

In der Lösestellung L hingegen schwenkt die Betätigungsanordnung 60 die beiden Hakenkörper 51 in eine Schräglage (Figur 7), in welcher die Stützflächen 87, 88 von den Widerlagerflächen 89 entfernt sind, z.B. weggeschwenkt sind. Weiterhin ist der Haken 53 aus der Hakenaufnahmen 55 ausgeschwenkt, sodass das Kuppelelement 40 bezüglich des Kuppelelements 20 entlang der Steckachse S beweglich ist.

An dieser Stelle sei bemerkt, dass eine Übertotpunkt-Mechanik auch nur dazu dienen kann, eine zuverlässige, sichere Verriegelung darzustellen.

Weiterhin ist es zweckmäßig, wenn auch in der Zeichnung nicht dargestellt, dass die Übertotpunkt-Mechanik 67 oder eine andere Übertotpunkt-Mechanik (nicht dargestellt) einstellbar ist. So ist beispielsweise die Drehachse D4 bezüglich des Schwenkhebels oder Betätigungshebels 61 verstellbar, beispielsweise anhand einer in Figur 10 schematisch als Pfeil eingezeichneten Stellschraube 15, umso die Totpunkt-Lage justieren zu können.

Es wäre aber auch denkbar, ein die Schwenkachse D4 definierendes Lagerelement bezüglich des Übertragungsglieds 70 verstellbar anzuordnen.

Weiterhin kann das Lagerelement für die Schwenkachse D4 eine gewisse Exzentrizität aufweisen, d.h. dass durch Verstellen des Lagerelements, zum Beispiel eines Lagerbolzens, anhand einer Drehbewegung die Lage der Drehachse D4 einstellbar ist.

## Patentansprüche

1. Lastenträgerkupplung zur Ankupplung eines Heck-Lastenträgers an ein Kraftfahrzeug, insbesondere einen Personenkraftwagen, wobei die Lastenträgerkupplung (10) ein zur Befestigung am Kraftfahrzeug vorgesehenes oder am Kraftfahrzeug angeordnetes Fahrzeug-Kuppelelement (20) und ein am Lastenträger angeordnetes oder zur Befestigung am Lastenträger vorgesehenes Lastenträger-Kuppelelement (40) umfasst, wobei die Kuppelelemente (20, 40) ein Steckteil (41) und eine Steckaufnahme (20) umfassen, die entlang einer Steckachse (S) aneinander ansteckbar sind, wobei die Lastenträgerkupplung (10) eine Formschlusskörperanordnung (50) mit mindestens einem durch eine Betätigungsanordnung (60) antreibbaren beweglichen Formschlusskörper (54) zum Eingriff in eine Formschlussaufnahme (56) aufweist, wobei die Formschlusskörperanordnung (50) beim Eingriff des mindestens einen Formschlusskörpers in die Formschlussaufnahme (56) eine Verriegelungsstellung (V) einnimmt und ein Entfernen der Kuppelelemente (20, 40) voneinander bezüglich der Steckachse (S) blockiert und ansonsten eine Lösestellung (L) einnimmt und ein Entfernen der Kuppelelemente (20, 40) voneinander ermöglicht, wobei der mindestens eine Formschlusskörper (54) einen Bestandteil eines um eine Schwenkachse (D1) schwenkbeweglich am einen Kuppelelement (40) angeordneten Hakenkörpers (51) bildet, der in der Verriegelungsstellung (V) zum Verhaken längs der Steckachse (S) in eine Hakenaufnahme (55) am anderen Kuppelelement eingreift und sich mit mindestens einer Stützfläche (87, 88) an mindestens einer Widerlagerfläche (89) dieses anderen Kuppelelements quer zu der Steckachse (S) abstützt, **dadurch gekennzeichnet, dass** der mindestens eine Hakenkörper (51) an einer Außenseite des Steckteils (41) oder einer Innenseite der Steckaufnahme (20) angeordnet ist, sodass er zwischen den ineinander gesteckten Kuppelelementen (20, 40) sandwichartig angeordnet ist.

2. Lastenträgerkupplung nach Anspruch 1, **dadurch gekennzeichnet, dass** die mindestens eine Stützfläche (87, 88) eine sich parallel oder im Wesentlichen parallel zu der Steckachse (S) erstreckende Stützfläche (87, 88) umfasst.

3. Lastenträgerkupplung nach Anspruch 1 oder 2, **dadurch gekennzeichnet, dass** die mindestens eine Stützfläche (87, 88) eine Schrägfläche oder Keilfläche und/oder die mindestens eine Stützfläche (87, 88) zueinander winkelige, insbesondere zueinander rechtwinkelige, Stützflächen (87, 88) zur Anlage an zueinander winkeligen Widerlagerflächen (89) umfasst.

4. Lastenträgerkupplung nach einem der vorhergehenden Ansprüche, **dadurch gekennzeichnet, dass** die mindestens eine Stützfläche (87, 88) einander entgegengesetzte erste und zweite Stützflächen (87, 88) umfasst, die sich in der Verriegelungsstellung (V) an einander gegenüberliegenden Widerlagerflächen (89) des anderen Kuppelelements abstützen, und/oder die an entgegengesetzten Seiten bezüglich der Schwenkachse (D1) des Hakenkörpers (51) angeordnet sind.

5. Lastenträgerkupplung nach einem der vorhergehenden Ansprüche, **dadurch gekennzeichnet, dass** die mindestens eine Stützfläche (87, 88) eine erste und eine zweite, bezüglich der Steckachse (S) hintereinander angeordnete Stützflächen (87, 88) umfassen.

6. Lastenträgerkupplung nach einem der vorhergehenden Ansprüche, **dadurch gekennzeichnet, dass** der mindestens eine Formschlusskörper (54) einen Hakenvorsprung des Hakenkörpers (51) bildet und/oder vor die mindestens eine Stützfläche (87, 88) oder eine Stützfläche (87, 88) vorsteht und/oder einstückig mit dem Hakenkörper (51) und/oder am freien Endbereich des Hakenkörpers (51) angeordnet ist.

7. Lastenträgerkupplung nach einem der vorhergehenden Ansprüche, **dadurch gekennzeichnet, dass** die Steckaufnahme (20) an dem Fahrzeug-Kuppelelement (20) und das Steckteil (41), insbesondere der Steckvorsprung, an dem Lastenträger-Kuppelelement (40) vorgesehen sind.

8. Lastenträgerkupplung nach einem der vorhergehenden Ansprüche, **dadurch gekennzeichnet, dass** der Hakenkörper (51) einen Schwenkhebel (57) bildet, wobei die Betätigungsanordnung (60) am einen Längsende des Schwenkhebels (57) angreift und einen Hakenvorsprung, insbesondere der mindestens eine Formschlusskörper (54), am anderen Längsende des Schwenkhebels (57) angeordnet ist.

9. Lastenträgerkupplung nach einem der vorhergehenden Ansprüche, **dadurch gekennzeichnet, dass** der Hakenkörper (51) einen Spannkörper zur Verspannung der Kuppelelemente (20, 40) quer zu der Steckachse (S) bildet und durch die Betätigungsanordnung (60) zwischen einer Spannstellung, in der die Kuppelelemente (20, 40) miteinander verspannt sind, und einer Freigabestellung, in der die Kuppelelemente (20, 40) entlang der Steckachse (S) längsbeweglich relativ zueinander sind, verstellbar ist.

10. Lastenträgerkupplung nach einem der vorhergehenden Ansprüche, **dadurch gekennzeichnet, dass** ein Paar von Hakenkörpern (51) vorgesehen ist, die aneinander entgegengesetzten Seiten des Steckteils (41) oder der Steckaufnahme (20) angeordnet sind.

11. Lastenträgerkupplung nach einem der vorhergehenden Ansprüche, **dadurch gekennzeichnet, dass** die Betätigungsanordnung (60) eine Hebelanordnung, insbesondere mindestens einen manuell betätigbaren Hebel, und/oder ein Übersetzungsgetriebe umfasst und/oder für eine manuelle Betätigung vorgesehen ist.

12. Lastenträgerkupplung nach einem der vorhergehenden Ansprüche, **dadurch gekennzeichnet, dass** sie eine Übertotpunkt-Mechanik (67) mit einem Totpunkt zwischen der Verriegelungsstellung (V) und der Lösestellung (L) umfasst.

13. Lastenträgerkupplung nach Anspruch 12, **dadurch gekennzeichnet, dass** die Übertotpunkt-Mechanik (67) ein Hebelgetriebe umfasst.

14. Lastenträgerkupplung nach Anspruch 12 oder 13, **dadurch gekennzeichnet, dass** eine Schwenkachse (D3) des Betätigungshebels (61) und eine Schwenkachse (D2) des Übertragungsglieds (70) an einander entgegengesetzten Seiten des Kuppelelements, das die Übertotpunkt-Mechanik (67) trägt, angeordnet sind.

15. Lastenträgerkupplung nach einem der vorhergehenden Ansprüche, **dadurch gekennzeichnet, dass** die Formschlusskörperanordnung (50) und/oder die Betätigungsanordnung (60), insbesondere die Übertotpunkt-Mechanik (67), in der Verriegelungsstellung (V) durch ein Schloss verschließbar und/oder durch einen Riegel verriegelbar und/oder durch eine Rastanordnung verrastbar ist.

## Claims

1. Load carrier coupling for coupling a rear load carrier to a motor vehicle, in particular a car, wherein the load carrier coupling (10) includes a vehicle coupling element (20) provided for attaching to the motor vehicle or fitted to the motor vehicle, and a load carrier coupling element (40) fitted to the load carrier or provided for attaching to the load carrier, wherein the coupling elements (20, 40) include a plug-in part (41) and a plug-in socket (20) which may be plugged together along an insertion axis (S), wherein the load carrier coupling (10) has an interlocking body assembly (50) with at least one movable interlocking body (54) drivable by an actuating assembly (60) to engage in an interlocking location (56), wherein the interlocking body assembly (50) on engagement of the interlocking body or bodies in the interlocking location (56) adopts a locked position (V) blocking removal of the coupling elements (20, 40) from one another relative to the insertion axis (S), and otherwise adopts a release position (L) and allows removal of the coupling elements (20, 40) from one another, wherein the interlocking body or bodies (54) form an integral part of a hook body (51) mounted on one coupling element (40) with the ability to pivot around a swivel axis (D1) and in the locked position (V), for hooking along the insertion axis (S), engaging in a hook seating (55) on the other coupling element and being supported by at least one support surface (87, 88) on at least one thrust bearing surface (89) of this other coupling element transversely to the insertion axis (S), **characterised in that** the hook body or bodies (51) is or are provided on an outer side of the plug-in part (41) or an inner side of the plug-in socket (20), so that it or they is or are arranged in a sandwich-like manner between the plugged-together coupling elements (20, 40).

2. Load carrier coupling according to claim 1, **characterised in that** the support surface or surfaces (87, 88) includes or include one support surface (87, 88) extending parallel or substantially parallel to the insertion axis (S).

3. Load carrier coupling according to claim 1 or 2, **characterised in that** the support surface or surfaces (87, 88) includes or include an inclined surface or a wedge surface and/or that the support surface or surfaces (87, 88) includes or include support surfaces (87, 88) at an angle to one another, in particular a right-angle, for contact with thrust bearing surfaces (89) at an angle to one another.

4. Load carrier coupling according to any of the preceding claims, **characterised in that** the support surface or surfaces (87. 88) includes or include first and second support surfaces (87, 88) opposite one another which in the locked position (V) rest on thrust bearing surfaces (89), opposite one another, of the other coupling element, and/or which are arranged on opposite sides relative to the swivel axis (D1) of the hook body (51).

5. Load carrier coupling according to any of the preceding claims, **characterised in that** the support surface or surfaces (87. 88) includes or include first and second support surfaces (87, 88) arranged consecutively relative to the insertion axis (S).

6. Load carrier coupling according to any of the preceding claims, **characterised in that** the interlocking body or bodies (54) forms or form a hook projection of the hook body (51), and/or protrudes or protrude from the support surface or surfaces (87. 88) or from one support surface (87, 88), and/or is or are integral with the hook body (51), and/or is or are fitted to the free end section of the hook body (51).

7. Load carrier coupling according to any of the preceding claims, **characterised in that** the plug-in socket (20) is provided on the vehicle coupling element (20), and the plug-in part (41), in particular the plug-in projection, on the load carrier coupling element (40).

8. Load carrier coupling according to any of the preceding claims, **characterised in that** the hook body (51) forms a pivot lever (57), wherein the actuating assembly (60) acts at one longitudinal end of the pivot lever (57) and a hook projection, in particular the interlocking body or bodies (54), is or are located at the other longitudinal end of the pivot lever (57).

9. Load carrier coupling according to any of the preceding claims, **characterised in that** the hook body (51) forms a clamping body for bracing the coupling elements (20, 40) transversely to the insertion axis (S) and is adjustable by the actuating assembly (60) between a clamped position in which the coupling elements (20, 40) are braced against one another, and a released position in which the coupling elements (20, 40) may be moved relative to one another along the insertion axis (S).

10. Load carrier coupling according to any of the preceding claims, **characterised in that** a pair of hook bodies (51) is provided, arranged on opposite sides of the plug-in part (41) or the plug-in socket (20).

11. Load carrier coupling according to any of the preceding claims, **characterised in that** the actuating assembly (60) includes a lever assembly, in particular at least one manually operable lever, and/or a step-up gearing and/or is provided for manual actuation.

12. Load carrier coupling according to any of the preceding claims, **characterised in that** it includes an over-centre mechanism (67) with a dead point between the locked position (V) and the release position (L).

13. Load carrier coupling according to claim 12, **characterised in that** the over-centre mechanism (67) includes a lever mechanism.

14. Load carrier coupling according to claim 12 or 13, **characterised in that** a swivel axis (D3) of the operating lever (61) and a swivel axis (D2) of the transmission member (70) are arranged on opposite sides of the coupling element carrying the over-centre mechanism (67).

15. Load carrier coupling according to any of the preceding claims, **characterised in that** the interlocking body assembly (50) and/or the actuating assembly (60), in particular the over-centre mechanism (67), may be locked in the locked position (V) by a lock and/or latched by means of a latching assembly.

## Revendications

1. Couplage de support de charges servant à accoupler un support de charges arrière à un véhicule automobile, en particulier à un véhicule de tourisme, dans lequel le couplage de support de charges (10) comprend un élément de couplage de véhicule (20) prévu pour être fixé au niveau du véhicule automobile ou disposé au niveau du véhicule automobile et un élément de couplage de support de charges (40) disposé au niveau du support de charges ou prévu pour être fixé au niveau du support de charges, dans lequel les éléments de couplage (20, 40) comprennent une partie enfichable (41) et un logement d'enfichage (20), qui peuvent être attachés l'un à l'autre par enfichage le long d'un axe d'enfichage (S), dans lequel le couplage de support de charges (10) présente un ensemble de corps à complémentarité de forme (50) avec au moins un corps à complémentarité de forme (54) mobile pouvant être entraîné par un ensemble d'actionnement (60), destiné à entrer en prise avec un logement à complémentarité de forme (56), dans lequel l'ensemble de corps à complémentarité de forme (50) adopte une position de verrouillage (V) lors de l'entrée en prise de l'au moins un corps à complémentarité de forme avec le logement à complémentarité de forme (56) et bloque un éloignement des éléments de couplage (20, 40) les uns des autres par rapport à l'axe d'enfichage (S) et adopte sinon une position de déblocage (L) et permet un éloignement des éléments de couplage (20, 40) les uns des autres, dans lequel l'au moins un corps à complémentarité de forme (54) fait partie intégrante d'un corps de crochet (51) disposé au niveau d'un élément de couplage (40) de manière mobile par pivotement autour d'un axe de pivotement (D1), lequel entre en prise avec un logement de crochet (55) au niveau de l'autre élément de couplage dans la position de verrouillage (V) aux fins de l'assemblage par crochet le long de l'axe d'enfichage (S) et prend appui, par au moins une face de soutien (87, 88), au niveau d'au moins une face de butée (89) dudit autre élément de couplage de manière transversale par rapport à l'axe d'enfichage (S), **caractérisé en ce que** l'au moins un corps de crochet (51) est disposé au niveau d'un côté extérieur de la partie enfichable (41) ou au niveau d'un côté intérieur du logement d'enfichage (20) de sorte qu'il est disposé en sandwich entre les éléments de couplage (20, 40) enfichés les uns dans les autres.

2. Couplage de support de charges selon la revendication 1, **caractérisé en ce que** l'au moins une face de soutien (87, 88) comprend une face de soutien (87, 88) s'étendant de manière parallèle ou sensiblement parallèle par rapport à l'axe d'enfichage (S).

3. Couplage de support de charges selon la revendication 1 ou 2, **caractérisé en ce que** l'au moins une face de soutien (87, 88) comprend une face oblique ou une face inclinée, et/ou l'au moins une face de soutien (87, 88) comprend des faces de soutien (87, 88) formant un angle entre elles, en particulier un angle droit, destinées à venir en appui au niveau de faces de butée (89) formant un angle entre elles.

4. Couplage de support de charges selon l'une quelconque des revendications précédentes, **caractérisé en ce que** l'au moins une face de soutien (87, 88) comprend des premières et des deuxièmes faces de soutien (87, 88) opposées les unes aux autres, qui prennent appui, dans la position de verrouillage (V), au niveau de faces de butée (89), se faisant face les unes les autres, de l'autre élément de couplage, et/ou qui sont disposées au niveau de côtés opposés par rapport à l'axe de pivotement (D1) du corps de crochet (51).

5. Couplage de support de charges selon l'une quelconque des revendications précédentes, **caractérisé en ce que** l'au moins une face de soutien (87, 88) comprend une première et une deuxième face de soutien (87, 88) disposées l'une derrière l'autre par rapport à l'axe d'enfichage (S).

6. Couplage de support de charges selon l'une quelconque des revendications précédentes, **caractérisé en ce que** l'au moins un corps à complémentarité de forme (54) forme une partie saillante de crochet du corps de crochet (51), et/ou fait saillir de l'au moins une face de soutien (87, 88) ou d'une face de soutien (87, 88) et/ou est disposé d'un seul tenant avec le corps de crochet (51) et/ou au niveau de la zone d'extrémité libre du corps de crochet (51).

7. Couplage de support de charges selon l'une quelconque des revendications précédentes, **caractérisé en ce que** le logement d'enfichage (20) est prévu au niveau de l'élément de couplage de véhicule (20) et la partie enfichable (41), en particulier la partie saillante enfichable, est prévue au niveau de l'élément de couplage de support de charges (40).

8. Couplage de support de charges selon l'une quelconque des revendications précédentes, **caractérisé en ce que** le corps de crochet (51) forme un levier de pivotement (57), dans lequel l'ensemble d'actionnement (60) s'engage au niveau d'une extrémité longitudinale du levier de pivotement (57) et une partie saillante de crochet, en particulier l'au moins un corps à complémentarité de forme (54), est disposée au niveau de l'autre extrémité longitudinale du levier de pivotement (57).

9. Couplage de support de charges selon l'une quelconque des revendications précédentes, **caractérisé en ce que** le corps de crochet (51) forme un corps de serrage servant à assembler par serrage les éléments de couplage (20, 40) de manière transversale par rapport à l'axe d'enfichage (S) et peut être ajusté par l'ensemble d'actionnement (60) entre une position de serrage, dans laquelle les éléments de couplage (20, 40) sont assemblés les uns aux autres par serrage, et une position de desserrage, dans laquelle les éléments de couplage (20, 40) sont mobiles en longueur les uns par rapport aux autres le long de l'axe d'enfichage (S).

10. Couplage de support de charges selon l'une quelconque des revendications précédentes, **caractérisé en ce qu'**une paire de corps de crochet (51) est prévue, lesquels sont disposés au niveau de côtés opposés les uns aux autres de la partie enfichable (41) ou du logement d'enfichage (20).

11. Couplage de support de charges selon l'une quelconque des revendications précédentes, **caractérisé en ce que** l'ensemble d'actionnement (60) comprend un ensemble de leviers, en particulier au moins un levier pouvant être actionné manuellement, et/ou un mécanisme démultiplicateur et/ou est prévu en vue d'un actionnement manuel.

12. Couplage de support de charges selon l'une quelconque des revendications précédentes, **caractérisé en ce qu'**il comprend un mécanisme à passage de point mort brusque (67) avec un point mort entre la position de verrouillage (V) et la position de déblocage (L).

13. Couplage de support de charges selon la revendication 12, **caractérisé en ce que** le mécanisme à passage de point mort brusque (67) comprend un mécanisme à leviers.

14. Couplage de support de charges selon la revendication 12 ou 13, **caractérisé en ce qu'**un axe de pivotement (D3) du levier d'actionnement (61) et un axe de pivotement (D2) de l'organe de transmission (70) sont disposés au niveau de côtés opposés les uns aux autres de l'élément de couplage, qui supporte le mécanisme de passage au point mort brusque (67).

15. Couplage de support de charges selon l'une quelconque des revendications précédentes, **caractérisé en ce que** l'ensemble de corps à complémentarité de forme (50) et/ou l'ensemble d'actionnement (60), en particulier le mécanisme de passage au point mort brusque (67), peuvent être fermés dans la position de verrouillage (V) par une serrure, et/ou peuvent être verrouillés par un verrou et/ou peuvent être enclenchés par un ensemble d'enclenchement.
